# FASCICULE DE BREVET EUROPEEN

(11) **EP 3 350 108 B1**
(45) Date de publication et mention de la délivrance du brevet: **03.06.2020**
(21) Numéro de dépôt: 16781504.2
(22) Date de dépôt: 16.09.2016
(51) Int. Cl.: B65H 75/36, B65H 75/44, H02G 11/00

(54) **DISPOSITIF DÉVIDOIR DE CÂBLE OU TUYAU**
KABEL- ODER SCHLAUCHTROMMEL
CABLE OR HOSE REEL DEVICE

(30) Priorité: 18.09.2015 FR 1558836
(43) Date de publication de la demande: 25.07.2018
(73) Titulaire: Renault S.A.S., 92100 Boulogne-Billancourt (FR)
(72) Inventeur: CHATROUX, Daniel, 38470 Teche (FR); GAILLARD, Frédéric, 38500 Voiron (FR); GUILLERMIN, Olivier, 69780 Toussieu (FR); MERMIN, Daniel, 38360 Sassenage (FR); DUPONT, Jérémy, 38300 Bourgoin-jallieu (FR)
(74) Mandataire: Cabinet Beaumont
(86) Numéro de dépôt international: PCT/FR2016/052358
(87) Numéro de publication internationale: WO 2017/046545

(56) Documents cités:
- WO-A1-2005/108268
- WO-A1-2014/205464
- JP-A- 2013 043 717
- JP-U- S55 138 413
- JP-Y1- S5 026 988
- US-A1- 2015 014 461
- US-B1- 7 617 840

## Description

### Domaine

La présente description concerne de façon générale des dispositifs de rangements d'éléments enroulables tels que des câbles, tuyaux, fils, etc. La présente description concerne plus particulièrement un dispositif dévidoir d'un élément enroulable et s'applique plus particulièrement à un dévidoir d'un câble électrique destiné à un système de raccordement électrique de recharge d'une batterie de véhicule automobile ou similaire.

### Exposé de l'art antérieur

La recharge de la ou des batteries d'un véhicule automobile s'effectue généralement en raccordant un chargeur de batterie contenu dans le véhicule à une source d'énergie électrique, par exemple un réseau de distribution d'électricité ou une installation photovoltaïque. Pour cela, un câble relie le chargeur à une station de recharge alimentée en électricité.

Lorsque le câble n'est pas utilisé, c'est à dire qu'il ne raccorde aucun chargeur au réseau, il a besoin d'être rangé. Pour cela, on prévoit habituellement soit un enrouleur de câble, soit un coffre dans lequel le câble est mis en vrac ou lové à la main que ce soit côté véhicule ou côté station de recharge.

Il existe un besoin d'amélioration des dispositifs de rangement de câble électrique, notamment pour des systèmes de raccordement électrique appliqués à la recharge de véhicules électriques.

Plus généralement, il existe un besoin d'amélioration de dispositifs de rangement d'éléments enroulables de type câble (électrique, métallique, etc.) ou tuyau (d'arrosage, d'air comprimé, etc.) afin de rendre pratique leur utilisation.

Le document JP S55 138413 U décrit un système de filage vertical constituant un tampon de tension du fil entre une partie amont de celui-ci et une partie aval. Les deux parties sont mobiles, le tampon de tension ayant pour rôle que le fil ne quitte des éléments de guidage. Le document JP S50 26988 décrit un autre système de filage du même type.

Le document US 7 617 840 décrit un enrouleur pour tuyau d'arrosage utilisant des rangées de galets en demi-cercles pour un rangement vertical, les demi-cercles étant de même diamètre et étant empilés dans des plans parallèles. Le document WO 2005/108268 écrit un système similaire.

Le document US 2015/014461 décrit un système vertical dans lequel deux plateaux portent chacun un unique demi-cercle de galets.

Le document WO2014/205464 décrit un système de fourniture d'énergie avec un dévidoir selon le préambule de la revendication 1.

### Résumé

Un mode de réalisation vise à pallier tout ou partie des inconvénients des dispositifs actuels de rangement d'éléments enroulables de type câbles, tuyaux, etc.

Un mode de réalisation vise plus particulièrement à pallier tout ou partie des inconvénients des dispositifs actuels de rangement de câble électrique.

Un mode de réalisation propose un système particulièrement adapté au rangement d'un câble de plusieurs mètres.

Un mode de réalisation propose un système particulièrement simple d'emploi.

Un mode de réalisation propose une solution particulièrement adaptée au rangement du câble dans un espace plan.

Un mode de réalisation propose un système automatique ne requérant aucun apport d'énergie externe au système pour le rangement du câble.

Ainsi, un mode de réalisation prévoit un dévidoir d'un élément enroulable comportant :
au moins deux plateaux, mobiles en translation coplanaire l'un par rapport à l'autre ; et
des éléments de guidage disposés approximativement en plusieurs demi-cercles concentriques de guidage dudit élément enroulable sur chaque plateau depuis une première extrémité fixe (54) de l'élément enroulable.

Selon un mode de réalisation, l'élément enroulable passe autour des éléments de guidage en parcourant successivement, depuis ladite première extrémité fixe, un demi-cercle interne d'un premier plateau, un demi-cercle interne d'un deuxième plateau, les demi-cercles successifs de rayons croissants des premier et deuxième plateaux, jusqu'à un demi-cercle externe du premier plateau et un demi-cercle externe du deuxième plateau.

Selon un mode de réalisation, le dévidoir comporte en outre au moins un élément de rappel élastique vers une position dans laquelle les plateaux sont écartés l'un de l'autre.

Selon un mode de réalisation, l'élément de rappel élastique est un vérin pneumatique.

Selon un mode de réalisation, l'élément de rappel élastique est un ressort d'extension.

Selon un mode de réalisation, un des plateaux est fixe, un rappel de l'autre plateau vers une position où les plateaux sont écartés l'un de l'autre s'opère par le poids de cet autre plateau et de l'élément enroulable.

Selon un mode de réalisation, le dévidoir comporte en outre un boîtier pourvu d'une lumière, destinée à la sortie d'une extrémité libre de l'élément enroulable.

Selon un mode de réalisation, l'épaisseur du boîtier est choisie en fonction du diamètre du câble.

Selon un mode de réalisation, lesdits éléments de guidage sont des poulies ou galets ayant des axes perpendiculaires auxdits plateaux.

Selon l'invention, le dévidoir comporte en outre un troisième plateau pourvu de lumières radiales dans la direction desdits cercles concentriques et destinées au passage d'éléments de guidage ponctuels de type poulies.

Selon un mode de réalisation, les éléments de guidage sont des glissières concentriques.

Selon un mode de réalisation, l'élément enroulable est un câble électrique.

Un mode de réalisation prévoit une installation de recharge d'un véhicule électrique, comportant un dévidoir de câble.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, de façon très schématique, un mode de réalisation d'un système de raccordement électrique pour la charge de véhicule automobile et un tel véhicule ;
la figure 2 est une vue schématique et fonctionnelle d'un mode de réalisation d'un dispositif dévidoir de câble électrique ;
les figures 3A et 3B sont des vues schématiques de dessus illustrant partiellement le dispositif dévidoir, respectivement câble déployé et câble enroulé ;
la figure 4 est une vue en coupe schématique d'un mode de réalisation d'un dispositif dévidoir de câble ;
les figures 5A, 5B et 5C sont des vues schématiques illustrant des variantes de réalisation d'éléments de guidage du câble du dispositif dévidoir ; et
la figure 6 est une vue schématique d'encore un autre mode de réalisation d'un dispositif dévidoir de câble électrique.

### Description détaillée

De mêmes éléments ont été désignés par de mêmes références aux différentes figures. Par souci de clarté, seuls les éléments qui sont utiles à la compréhension des modes de réalisation décrits ont été représentés et seront détaillés. En particulier, la gestion de la recharge d'une batterie de véhicule n'a pas été détaillée, les modes de réalisation décrits étant compatibles avec les solutions usuelles. De plus, la réalisation du câble électrique lui-même n'a pas non plus été détaillée, les modes de réalisation décrits étant là encore compatibles avec les câbles usuels.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence à l'orientation des figures ou à un système de raccordement dans une position normale d'utilisation. Sauf précision contraire, les expressions "approximativement", "sensiblement", et "de l'ordre de" signifient à 10 % près ou 10° près, de préférence à 5 % ou 5° près.

La présente description fait référence à un exemple d'application au rangement d'un câble électrique destiné à la charge d'un véhicule électrique. Toutefois, les modes de réalisation qui vont être décrits s'appliquent plus généralement au rangement de tout câble électrique, ou encore de tout élément enroulable de type câble ou tuyau (par exemple un tuyau d'arrosage ou d'air comprimé, un câble métallique de traction, etc.) pour lequel des problèmes similaires se posent.

Parmi les contraintes engendrées par l'application à la recharge d'un véhicule électrique, on note :
une grande longueur de câble, c'est-à-dire une longueur pouvant atteindre une dizaine de mètres, qui engendre un poids non négligeable pour le câble, ce qui habituellement pose problème à l'utilisateur ;
un souhait de recharge dite rapide, c'est-à-dire avec un courant de plusieurs dizaines d'ampères, requérant une section de conducteurs de plusieurs millimètres carrée (typiquement de l'ordre de 6 mm²), participant à accroitre le poids du câble ;
un besoin de ranger le câble d'une façon telle qu'il ne s'emmêle pas afin de faciliter les utilisations ultérieures ;
un besoin d'un système de faible encombrement.

La problématique des systèmes de stockage de câble pour former des dévidoirs présente une autre particularité, liée au fait qu'une des extrémités du câble est fixe. Il faut donc s'assurer d'un fonctionnement correct avec cette condition.

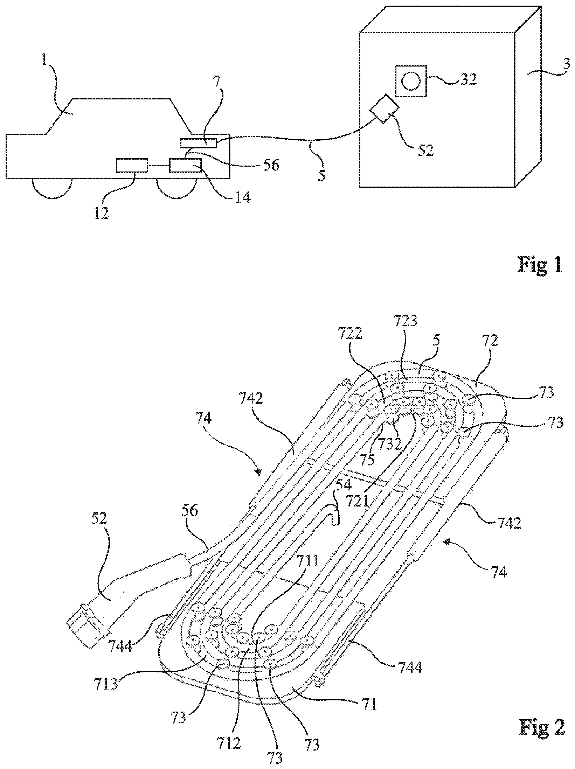

La figure 1 représente, de façon très schématique, un mode de réalisation d'un système de raccordement électrique pour la charge d'une batterie d'un véhicule automobile et un tel véhicule, câble déployé.

Un véhicule électrique ou hybride 1 comporte une ou plusieurs batteries 12 destinées à fournir l'énergie nécessaire à sa propulsion. Ces batteries 12 sont reliées à un ou plusieurs dispositifs 14 de gestion de charge et de commande (chargeurs) destinés à contrôler la charge des batteries lorsqu'elles sont branchées à une installation 3 de fourniture d'électricité. L'installation 3 peut être une borne de recharge publique de type station-service, une installation domestique (par exemple au domicile de l'utilisateur du véhicule), etc.

L'installation 3 est équipée d'une prise électrique 32 de réception d'une fiche de raccordement 52 équipant l'extrémité d'un câble 5 électrique déployé depuis le véhicule 1. Le rangement du câble dans le véhicule s'effectue en vrac dans un coffre dédié ou à l'aide d'un dispositif 7 dévidoir de câble.

L'installation 3 peut également être équipée d'un système de raccordement électrique (non représenté) consistant en un dispositif similaire de rangement d'un câble côté installation 3 pouvant être dévidé pour être raccordé au chargeur 14.

En supposant le câble côté véhicule, lors d'une recharge du véhicule 1, le câble 5 est étiré et sorti, au moins partiellement, du dispositif 7. Entre deux recharges, le câble 5 est rangé dans le dispositif 7.

La figure 2 est une vue schématique et fonctionnelle d'un mode de réalisation du dispositif 7 de rangement du câble 5.

Dans ce mode de réalisation, le dispositif 7 comporte :
deux plateaux 71 et 72, mobiles en translation coplanaire l'un par rapport à l'autre ; et
des éléments de guidage 73 disposés approximativement en plusieurs (au moins deux) demi-cercles concentriques 711, 712, et 713, etc., respectivement 721, 722 et 723, etc., de guidage du câble sur chaque plateau 71 et 72.

Le câble 5 est enroulé à plat depuis une première extrémité 54 fixe, située approximativement au milieu entre les deux plateaux 71 et 72, jusqu'à son extrémité libre 56 portant la fiche 52. Partant de l'extrémité 54, le câble 5 passe successivement autour des éléments de guidage en parcourant le demi-cercle interne 711 du premier plateau 71, le demi-cercle interne 721 du deuxième plateau, les demi-cercles successifs de rayons croissants, jusqu'au demi-cercle externe 713 du premier plateau et enfin le demi-cercle externe 723 du deuxième plateau.

L'extrémité 54 est raccordée par exemple à demeure au chargeur 14 par un tronçon 56 (figure 1). En variante, l'extrémité 54 porte une fiche de branchement au chargeur 14 ou au tronçon de raccordement au chargeur 14. Cette extrémité est fixe au niveau du dévidoir lui-même, c'est-à-dire que, dans le cas où un tronçon de câble sort du dévidoir par cette zone centrale, sa position est bloquée de manière à être fixe.

De préférence, le dispositif 7 comporte en outre au moins un élément de rappel élastique (dans l'exemple de la figure 2, deux vérins pneumatiques 74) vers une position dans laquelle les plateaux 71 et 72 sont écartés l'un de l'autre. Dans l'exemple de la figure 2, les deux vérins 74 sont fixés par leurs corps 742 à l'un 72 des plateaux et par leur tige 744 à l'autre plateau 71.

En variante, on utilise un ressort d'écartement des plateaux l'un par rapport à l'autre.

Selon un exemple de réalisation dans lequel le dispositif est placé approximativement à l'horizontale, c'est-à-dire que les plans des plateaux 71 et 72 sont approximativement horizontaux, les deux plateaux 71 et 72 sont mobiles en translation l'un vers l'autre.

Selon un autre exemple de réalisation, appliqué au cas où le dispositif 7 est dans une position verticale ou inclinée (non horizontale), le plateau (par exemple 72) situé en haut est fixe et comporte la sortie de câble (l'extrémité libre 52) et l'autre plateau (par exemple 71) situé en bas est mobile en translation. Dans ce cas, le poids du câble et du plateau bas peut suffire à rappeler le câble dans la position enroulée. Le cas échéant, on peut prévoir de lester le plateau bas pour faciliter le rappel vers la position écartée des plateaux.

Selon une variante de réalisation, le nombre de demi-cercles est différent d'une unité d'un plateau par rapport à l'autre, l'entrée et la sortie de câble étant alors du côté du plateau ayant le plus grand nombre de chemins de guidage du câble.

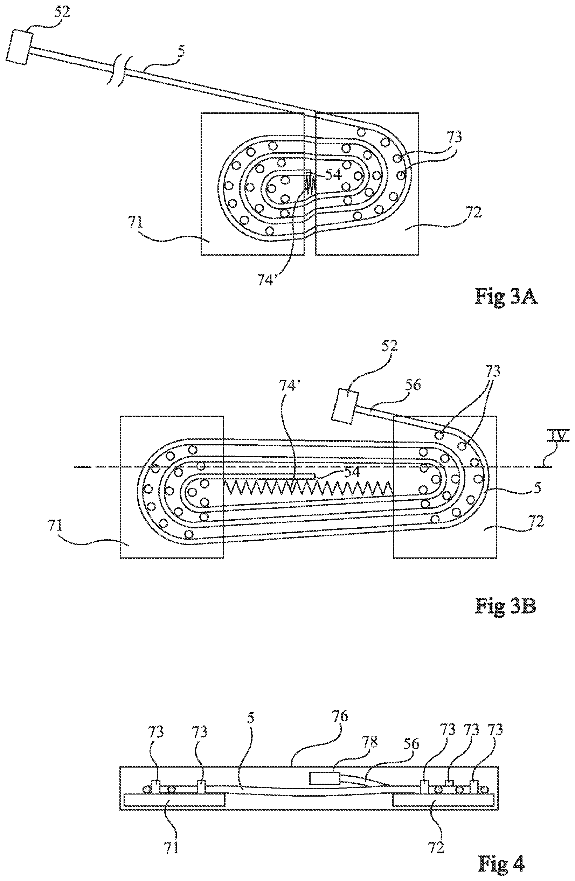

Les figures 3A et 3B sont des vues schématiques de dessus (en supposant un dispositif 7 horizontal) représentant un exemple de dispositif 7, respectivement en position câble rangé (ou enroulé) et câble déployé.

Les plateaux 71 et 72 sont mobiles en translation l'un vers l'autre entre une position (figure 3B) où ils sont écartés au maximum et où le câble 5 est rangé et une position (figure 3A) où ils sont rapprochés l'un de l'autre au maximum et où le câble est entièrement déployé. Selon la quantité de câble requise pour relier le véhicule 1 à l'installation 3 (figure 1), les plateaux 71 et 72 peuvent prendre toute position intermédiaire entre les positions extrêmes des figure 3A et 3B.

Lorsque le câble 5 est déployé, l'élément de rappel élastique, dans cet exemple un ressort 74' d'écartement, est armé par la traction opérée par l'utilisateur sur l'extrémité 56 (la fiche 52) du câble pour le déployer. Lorsque la traction sur le câble 5 est relâchée, le ressort 74' rappelle les plateaux vers leur position écartée, ce qui participe au rangement du câble 5.

Le cas échéant, la sortie de câble, côté extrémité libre, est équipée d'un frein pour éviter un rembobinage trop brusque. De même, le dispositif 7 peut comporter un système de blocage du câble en position déployée pour éviter une traction sur celui-ci pendant la recharge.

La figure 4 est une vue schématique en coupe selon la ligne IV de la figure 3B. En figure 4, on a également représenté un boîtier 76 dans lequel est logé l'ensemble du dispositif. Ce boîtier peut être un élément intégré au véhicule dans lequel est logé le dispositif 7 (par exemple, une plage arrière cache bagages, le capot moteur, le hayon arrière, etc.). Le boîtier comporte alors une lumière 78 de sortie du câble 5.

Comme illustré en figure 4, selon la force de rappel des éléments de rappel élastique, le câble peut, de par son poids, tomber entre les deux plateaux 71 et 72. Cela n'est cependant pas gênant dans la mesure où, sans superposition du câble, il n'y a pas de risque que le câble s'emmêle.

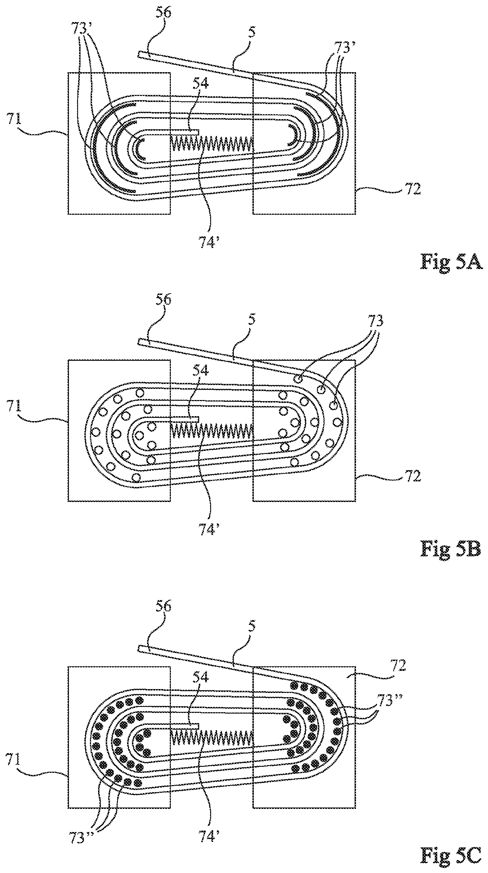

Les figure 5A, 5B et 5C sont des vues de dessus illustrant des variantes de chemins de guidage du câble dans un dispositif de rangement 7. Dans toutes ces figures, on prend pour exemple un élément de rappel en forme de ressort 74'.

Dans la réalisation de la figure 5A, on prévoit des glissières concentriques 73' pour définir les chemins guidant le câble 5.

La réalisation de la figure 5B correspond à l'utilisation de poulies 73 comme en figure 2. Les poulies 73 ont des axes perpendiculaires aux plans des plateaux 71 et 72.

La réalisation de la figure 5C prévoit des chemins de galets 73" plus rapprochés les uns des autres par rapport à la réalisation de la figure 5B.

De préférence, les galets 73" ou poulies 73 sont montées rotatives selon leurs axes verticaux respectifs afin de faciliter le déploiement et rangement du câble.

Par ailleurs, comme illustré en figure 2, les poulies 73 ont de préférence une forme en diabolo afin de comporter une gorge 732 de guidage du câble.

Selon la longueur du câble souhaitée, on peut prévoir plusieurs couches superposée, chacune constituée de deux plateaux et d'éléments de guidage. Dans ce cas, la sortie de câble d'un niveau correspond à l'entrée fixe du niveau suivant, etc.

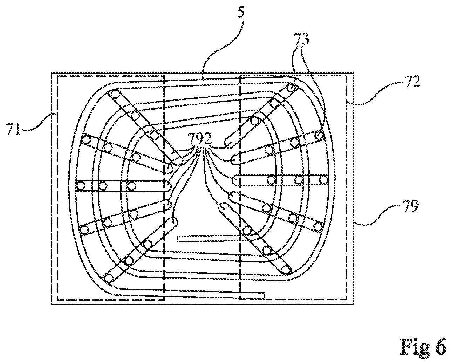

La figure 6 représente une variante dans laquelle, pour éviter que le câble n'ait tendance à tomber vers le fond du boiter comme en figure 4, le dispositif comporte, outre les deux plateaux 71 et 72 coulissant l'un vers l'autre et portant les éléments de guidage 73, un troisième plateau 79 continu sur lequel repose le câble. Le plateau 79 comporte alors des lumières 792 dans des directions radiales des cercles (virtuels) concentriques des chemins de guidage afin de permettre le déplacement des poulies 73 lors de la translation rectiligne des plateaux 71 et 72 l'un par rapport à l'autre.

Un avantage des modes de réalisation décrits est que l'encombrement du dévidoir de câble est particulièrement réduit. Par rapport à des systèmes de type enrouleur dans lesquels les spires de câble se superposent, on permet ici un dispositif plan, particulièrement adapté à une intégration dans un véhicule à l'horizontale (dans le plancher, sous le capot, le hayon, etc.) ou à la verticale (dans une aile, une portière, etc.). Par rapport à des dispositifs à base de poulies de l'art antérieur, les modes de réalisation décrits présentent l'avantage de minimiser la place perdue entre les allers-retours ou boucles du câble.

Un autre avantage est que, grâce à l'extrémité fixe du câble, on évite le besoin de contacts glissants ou tournants à l'extrémité fixe du câble (côté station de recharge). En effet, avec un système rotatif, le câble se vrille et finit par rompre si on ne prévoit pas de contacts tournants. Or, de tels contacts augmentent la complexité, les risques de défaillance et le coût. Ici, le mouvement de translation qui permet une extrémité fixe pour le câble ne nécessite aucun contact tournant ou glissant.

Un autre avantage est une réduction de l'échauffement du câble quand celui-ci est partiellement déroulé. En effet, avec les enrouleurs classiques dans lesquelles des spires du câble se superposent, on est généralement contraint de dérouler tout le câble pour réduire l'échauffement. Le dispositif dévidoir décrit évite un contact mécanique entre les spires du câble. Ainsi, on peut désormais charger la batterie à pleine puissance, y compris avec un câble partiellement dévidé.

Divers modes de réalisation ont été décrits. Diverses variantes et modifications apparaîtront à l'homme de l'art. En particulier, la mise en oeuvre pratique des modes de réalisation qui ont été décrits est à la portée de l'homme de métier à partir des indications fonctionnelles données ci-dessus. L'étendue de la protection de l'invention est définie par la portée des revendications.

## Revendications

1. Dévidoir (7) d'un élément enroulable (5) comportant :
au moins deux plateaux (71, 72), mobiles en translation coplanaire l'un par rapport à l'autre ;
des éléments de guidage (73 ; 73' ; 73") disposés approximativement en plusieurs demi-cercles concentriques (711, 712, 713, 721, 722, 723) de guidage dudit élément enroulable sur chaque plateau depuis une première extrémité fixe (54), au niveau du dévidoir, de l'élément enroulable ; et **caractérisé par**
un troisième plateau (79) pourvu de lumières radiales dans la direction desdits cercles concentriques et destinées au passage d'éléments de guidage ponctuels de type poulies (73).

2. Dévidoir selon la revendication 1, dans lequel l'élément enroulable passe autour des éléments de guidage en parcourant successivement, depuis ladite première extrémité fixe (54) un demi-cercle interne (711) d'un premier plateau (71), un demi-cercle interne (721) d'un deuxième plateau (72), les demi-cercles successifs de rayons croissants des premier et deuxième plateaux, jusqu'à un demi-cercle externe (713) du premier plateau et un demi-cercle externe (723) du deuxième plateau.

3. Dévidoir selon la revendication 1 ou 2, comportant en outre au moins un élément (74 ; 74') de rappel élastique vers une position dans laquelle les plateaux (71, 72) sont écartés l'un de l'autre.

4. Dévidoir selon la revendication 3, dans lequel l'élément de rappel élastique est un vérin pneumatique (74).

5. Dévidoir selon la revendication 3, dans lequel l'élément de rappel élastique est un ressort d'extension (74').

6. Dévidoir selon la revendication 1, dans lequel un des plateaux est fixe, un rappel de l'autre plateau vers une position où les plateaux sont écartés l'un de l'autre s'opérant par le poids de cet autre plateau et de l'élément enroulable.

7. Dévidoir selon l'une quelconque des revendications 1 à 6, comportant en outre un boîtier (76) pourvu d'une lumière (78), destinée à la sortie d'une extrémité libre (56) de l'élément enroulable.

8. Dévidoir selon la revendication 7, dans lequel l'épaisseur du boîtier (76) est choisie en fonction du diamètre du câble (5).

9. Dévidoir selon l'une quelconque des revendications 1 à 8, dans lequel lesdits éléments de guidage sont des poulies (73) ou galets (73") ayant des axes perpendiculaires auxdits plateaux (71, 72).

10. Dévidoir selon l'une quelconque des revendications 1 à 9, dans lequel les éléments de guidage sont des glissières (73') concentriques.

11. Dévidoir selon l'une quelconque des revendications 1 à 10, dans lequel l'élément enroulable est un câble électrique (5).

12. Installation de recharge d'un véhicule électrique, comportant un dévidoir de câble selon l'une quelconque des revendications 1 à 11.

## Patentansprüche

1. Eine Spule (7) für ein aufwickelbares Element (5), die Folgendes aufweist:
mindestens zwei Platten (71, 72), die relativ zueinander koplanar verschiebbar sind;
Führungselemente (73; 73'; 73"), die ungefähr in einer Vielzahl von konzentrischen Halbkreisen (711, 712, 713, 721, 722, 723) angeordnet sind, um das aufwickelbare Element auf jeder Platte von einem ersten festen Ende (54) des aufwickelbaren Elements auf der Höhe der Spule aus zu führen; und
**gekennzeichnet durch**
eine dritte Platte (79), die mit radialen Öffnungen zu den genannten konzentrischen Kreisen hin versehen und für den Durchgang von lokalen Führungselementen vom Typ Laufrollen (73) bestimmt ist.

2. Spule nach Anspruch 1, bei der das aufwickelbare Element um die Führungselemente herumläuft, indem es von dem ersten festen Ende (54) aus nacheinander einem inneren Halbkreis (711) einer ersten Platte (71), einem inneren Halbkreis (721) einer zweiten Platte (72), den aufeinanderfolgenden Halbkreisen mit zunehmenden Radien der ersten und zweiten Platten bis zu einem äußeren Halbkreis (713) der ersten Platte und einem äußeren Halbkreis (723) der zweiten Platte folgt.

3. Spule nach Anspruch 1 oder 2, die ferner mindestens ein Element (74; 74') zur elastischen Rückstellung in eine Position aufweist, in der die Platten (71, 72) voneinander beabstandet sind.

4. Spule nach Anspruch 3, wobei das elastische Rückstellelement ein pneumatischer Zylinder (74) ist.

5. Spule nach Anspruch 3, wobei das elastische Rückstellelement eine Druckfeder (74') ist.

6. Spule nach Anspruch 1, bei der eine der Platten feststehend ist, wobei eine Rückstellung der anderen Platte in eine Position, in der die Platten voneinander beabstandet sind, durch das Gewicht dieser anderen Platte und des aufwickelbaren Elements erreicht wird.

7. Spule nach einem der Ansprüche 1 bis 6, die ferner ein Gehäuse (76) aufweist, das mit einer Öffnung (78) versehen ist, die für den Auslass eines freien Endes (56) des aufwickelbaren Elements bestimmt ist.

8. Spule nach Anspruch 7, wobei die Dicke des Gehäuses (76) entsprechend dem Durchmesser des Kabels (5) ausgewählt wird.

9. Spule nach einem der Ansprüche 1 bis 8, wobei die Führungselemente Rollen (73) oder Walzen (73") sind, deren Achsen senkrecht zu den Platten (71, 72) stehen.

10. Spule nach einem der Ansprüche 1 bis 9, wobei die Führungselemente konzentrische Gleitschienen (73') sind.

11. Spule nach einem der Ansprüche 1 bis 10, wobei das aufwickelbare Element ein elektrisches Kabel (5) ist.

12. Ladestation für ein Elektrofahrzeug, die eine Kabelspule nach einem der Ansprüche 1 bis 11 aufweist.

## Claims

1. A reel (7) for a windable element (5) comprising:
at least two plates (71, 72), mobile in translation, coplanar with respect to each other;
guide elements (73; 73'; 73") arranged approximately in a plurality of concentric semi-circles (711, 712, 713, 721, 722, 723) for guiding said windable element on each plate from a first fixed end (54), at the reel level, of the windable element; and **characterized by**
a third plate (79) provided with radial ports towards said concentric circles and intended for the passing of local guide elements of pulley (73) type.

2. The reel according to claim 1, wherein the windable element runs around the guide elements by successively following, from said first fixed end (54), an internal semi-circle (711) of a first plate (71), an internal semi-circle (721) of a second plate (72), the successive semi-circles of increasing radiuses of the first and second plates, all the way to an external semi-circle (713) of the first plate and an external semi-circle (723) of the second plate.

3. The reel according to claim 1 or 2, further comprising at least one element (74; 74') of elastic return to a position where the plates (71, 72) are spaced apart from each other.

4. The reel according to claim 3, wherein the elastic return element is a pneumatic cylinder (74).

5. The reel according to claim 3, wherein the elastic return element is an extension spring (74').

6. The reel according to claim 1, wherein one of the plates is fixed, a return of the other plate to a position where the plates are spaced apart from each other being achieved by the weight of this other plate and of the windable element.

7. The reel according to any of claims 1 to 6, further comprising a casing (76) provided with a port (78), intended for the outlet of a free end (56) of the windable element.

8. The reel according to claim 7, wherein the thickness of the casing (76) is selected according to the diameter of the cable (5).

9. The reel according to any of claims 1 to 8, wherein said guide elements are pulleys (73) or rollers (73") having axes perpendicular to said plates (71, 72).

10. The reel according to any of claims 1 to 9, wherein the guide elements are concentric slide rails (73').

11. The reel according to any of claims 1 to 10, wherein the windable element is an electric cable (5).

12. An electric vehicle charging installation, comprising the cable reel according to any of claims 1 to 11.
